# EUROPÄISCHE PATENTANMELDUNG

(11) **EP 1 426 315 A1**
(43) Veröffentlichungstag der Anmeldung: **09.06.2004**
(21) Anmeldenummer: 03026232.3
(22) Anmeldetag: 14.11.2003
(51) Int. Cl.: B65G 57/24

(54) **Vorrichtung für die Stapelbildung flächiger Fixmasse**

(30) Priorität: 02.12.2002 DE 10256195
(71) Anmelder: Gesellschaft für Forschung und Entwicklung wirtschaftlicher Produktionssysteme mbH -GFE-, 33818 Leopoldshöhe (DE)
(72) Erfinder: Weniger, Heinz, 33613 Bielefeld (DE)

(57) **Zusammenfassung**

Vorrichtung für die Stapelbildung flächiger Fixmaße (3-21) mit beliebigen Stapelbildern (45) aus beliebigen Schnittplänen (25), bei der anstatt maßlich fixierter Stapelstationen mit jeweils eigenen Hubwerken Roste (40,41) beliebiger Anzahl und Größe eingesetzt werden, auf denen die Fixmaßstapel mit Staplern (60,61), deren Staplerschienen (43) auf die jeweilige Stapelgröße einstellbar ist, gebildet werden, sodass die Stapel vom Optimierungsrechner (80) auf der Roste dicht nebeneinander vorzusehen sind.

## Beschreibung

Die Erfindung betrifft eine Vorrichtung für die Stapelbildung flächiger Fixmaße, die vorher aus Standardplatten nach Schnittplänen, die in Schnittplangruppen zu einem Produktionsauftrag zusammengefaßt werden, von Aufteilsägen hergestellt werden.

Die bekannten Vorrichtungen für das Stapeln der Fixmaße haben sogenannte Stapelstationen mit ganz bestimmten Abmessungen, auf denen die Stapel gebildet werden. Stapelstationen müssen naturgemäß so groß sein, wie die Stapelgrundfläche des größten Stapels, der auf ihr gebildet werden soll.

Festzustellen ist auch, dass ein zeitgleicher Bedarf bei den Stapelstationen für die verschiedenen Fixmaße bei den verschiedenen Schnittplänen innerhalb einer Schnittplangruppe bei der Stapelbildung gegeben ist. Daraus entsteht je nach Anzahl der verschiedenen Fixmaße je Schnittplan innerhalb der Schnittplangruppen ein unterschiedlicher Bedarf an Stapelstationen innerhalb einer Stapelanlage. Werden zu wenig Stapelstationen vorgesehen, müssen in den Schnittplänen entsprechend weniger verschiedene Fixmaße eingeplant werden. Das bedeutet höheren Verschnitt, mehr verschiedene Schnittpläne in einer Schnittplangruppe und dadurch geringere Stückzahlen Standardplatten je Schnittplan, was wiederum zu niedrigem Nutzungsgrad der Aufteilsäge und somit der gesamten Aufteilanlage dadurch führt, dass die maximal vorgesehene Sägenschnitthöhe zu oft nicht genutzt wird. Um das zu vermeiden, müsste ein großer technischer Aufwand bei der Zahl der Stapelstationen, die eigenständige Maschinen sind, betrieben werden.
Werden viel Stapelstationen innerhalb einer Stapelanlage vorgesehen, entstehen hohe Maschinenkosten, die durch erhöhte Kosten für Wartung ect. und unnötig großen Platzbedarf noch gesteigert werden.

Der Erfindung liegt die Aufgabe zugrunde, diese großen Nachteile zu beseitigen, indem für die Stapelbildung von flächigen Fixmaßen keine maßlich fixierten Stapelstationen verwendet werden, die jeweils auch ein eigenes Hubwerk besitzen, also völlig eigenständige Maschinen sind und ausserdem mit Abmessungen für die größten Stapel auszulegen sind und die in ihrer Stückzahl den zahlenmäßig mindesten max. möglichen, verschiedenen Fixmaßen innerhalb einer Schnittplangruppe entsprechen sollten, wenn ein geringstmöglicher Verschnitt und höchstmögliche Stückzahlen Standardplatten je Schnittplan zwecks höchstmöglicher Nutzung aller Maschinen durch weitgehend ständige Nutzung der maximalen Sägenschnitthöhe erreicht werden sollen.

Eine weitere Aufgabe ist, dass aus jedem beliebigen Schnittplan mit jeder beliebigen Kombination verschiedener Fixmaße jedes beliebige Stapelbild herstellbar sein muß, und, dass mit der Erfindung auch unterschiedlich hohe Fixmaßblöcke innerhalb eines Stapelbildes mit Ausgleichsförderern auszugleichen und mit den gleichen Ausgleichsförderern eine Angleichung der schnittplanbedingt zu viel hergestellten Fixmaße gegenüber den Bestellstückzahlen durch Entnahme zu entfernen sind.
Eine weitere wichtige Aufgabe der Erfindung ist, dass für die Förderung der Stapel von der Stapelanlage zur Verpackungsanlage Fördereinrichtungen einzusetzen vorgesehen sind, mit denen die Stapel nicht wie üblich mit Rollenoder Kettenförderern gefördert werden, sondern mit Tragschiênenförderern, auf denen die Stapel vom Ort ihrer Bildung bis zur Verpackungsanlage sozusagen "getragen" werden. Dadurch entfallen die üblichen Reibungsbeschädigungen der sonst mit den Rollen- oder Kettenförderern in Berührung kommenden unteren Flächen eines Stapels, für deren Vermeidung eine kostspielige Herstellung von Schonplatten bzw. Paletten an die ständig wechselnden Größen der Stapelflächen und deren manuelle oder automatische Einbringung auf die Stapelstellen innerhalb der Stapelanlage entfallen, da es für die automatische Herstellung eines Schonplatten- bzw. Palettenschutzes und ihre Anbringung an die untere Stapelfläche innerhalb der nachfolgenden Verpackungsanlage bereits eine Lösung gibt.

Gelöst wird die Aufgabe durch die kennzeichnenden Teile der Schutzansprüche dadurch, indem für die Stapelbildung von flächigen Fixmaßen anstatt Stapelstationen Stapelflächen verwendet werden, die aus nebeneinanderliegenden Schienen aus beliebigem Material bestehen und hier als Roste bezeichnet werden. Für die jeweils aufzuteilenden Standardplatten einer Schnittplangruppe werden die jeweiligen Stapelbilder mit geringem Abstand zueinander auf der Roste eingeplant. Die Stapelbildung erfolgt solange an diesen Stellen auf der Roste, bis die Standardplatten einer Schnittplangruppe aufgeteilt sind. Dann werden die Stapelbilder auf die gesamte Roste für die nächste Schnittplangruppe eingeplant. Dabei ist jeweils zu beachten, dass für den zeitlich und stapelkörperlich nahtlosen Übergang von einer zur anderen Schnittplangruppe gesorgt wird, d. h., dass der Anfang einer jeweils nachfolgenden Schnittplangruppe auf der Roste vom Optimierungsrechner 80 eingeteilt ist und dabei "Verzahnungen" von gegenwärtigen mit nachfolgenden Stapelbildern ohne unnötigen Platz- und Zeitverlust auf der Roste durch entsprechende Anordnung der zeitlichen Reihenfolge der Fixmaßproduktion zu beachten ist.

Oberhalb der Stapelroste befinden sich Förderer, auf denen die Stapelbilder in jeder beliebigen Ausführung für ihre Stapelbildung zusammengefördert und danach von Staplern auf der Roste aufgestapelt werden.
Für das Zusammenfördern der Fixmaßblöcke, die aus mehreren übereinanderliegenden Fixmaßen bestehen, ist ein nach zwei Seiten arbeitender Fixmaßquerförderer vorgesehen, der einzelne oder mehrere Fixmaßblöcke von einem Winkelförderer auf angetriebene Friktionsförderer fördert.
Bei Einzelförderung der Fixmaßblöcke vom Winkelförderer auf den Friktionsförderer zu mehreren Fixmaßblöcken nebeneinander und hintereinander zu einem Stapelbild, ist auf dem Friktionsförderer zwischen den Fixmaßblöcken etwas Luft zu schalten, damit sie nicht aneinander stoßen, wenn sie beim Fördern vom Winkelförderer mit dem Fixmaßquerförderer auf den Friktionsförderer gefördert werden.
Mit einer 90° - Dreheinrichtung zwischen Aufteilsäge und Stapelanlage werden, wenn erforderlich, Fixmaßblöcke einzeln, oder mehrfach gemeinsam gedreht.
Es ist wie im Ausführungsbeispiel angedeutet vorgesehen, dass nach einer Aufteilsäge mehrere Stapelanlagen nebeneinander ähnlich dem Ausführungsbeispiel eingesetzt werden können.
Unterschiedlich hohe Fixmaßblöcke durch unterschiedliche Stückzahlen übereinanderliegender Fixmaße, werden mit Ausgleichsförderern auf gleiche Höhe gebracht.
Überzählige Fixmaße gegenüber der Bestellstückzahl werden mit den Ausgleichsförderern zu Ablagestationen gefördert, wenn nur die Lieferung der bestellten Fixmaße gefordert wird.
Die Ausgleichsförderer arbeiten vorzugsweise mit Vakuum.

Der Stapler ist so ausgebildet, dass er durch Zu- und Wegschaltung von Staplerschienen in seiner Arbeitsbreite beliebig veränderbar ist und dadurch die unterschiedlichen Stapelbilder mit nur geringem Abstand auf der Roste nebeneinander platziert werden können.
Der Stapler ist mit Seitenschiebern und Querrichtern für das Zusammenrichten der Fixmaßblöcke während der Förderung zur Stapelbildung auf der Roste ausgerüstet. Für diese Stapelbildung werden die aktiven Staplerschienen zurück in ihre Grundstellung geführt, und dadurch, dass die pneumatisch-mechanisch heb- und senkbaren Rückhalter stehen bleiben, werden die Fixmaßblöcke stapelbildend auf der Roste bzw. auf dem schon vorhandenen Stapel abgelegt. Es ist vorgesehen, dass die Stapelbildung auf Unterlegplatten, Paletten o. dgl. Unterlagen, die manuell oder automatisch mit Schonplattenförderern auf den für sie bestimmten Platz auf die Roste gebracht werden, wahlweise möglich ist, bevor mit der Stapelbildung begonnen wird.

Fertige Stapel werden von einem Längs-Querverschiebeförderer von der Roste abgefördert, indem seine einzeln schalbar, heb- und senbkbaren Tragschienen in der Anzahl entsprechend der Größe der Stapelbilder, bestimmt vom Optimierungsrechner, in die Roste hineingefördert und die Tragschienen angehoben werden und danach der fertige Stapel abgefördert und zur Umreifungsverpackung gebracht wird.

In der nachfolgenden Beschreibung wird das Ausführungsbeispiel der Erfindung dargestellt. Es zeigt:
- Figur 1: Querschnitt der Stapelanlage.
- Figur 2: Draufsicht Stapler.
- Figur 3: Draufsicht Stapelanlage vergrößert
- Figur 4: Draufsicht Stapelanlage in Gesamtaufteilanlage.
- Figur 5: Draufsicht Aufteilsäge.
- Figur 6: Draufsicht Verpackungsanlage.
- Figur 7: Schnittplan mit 11 verschiedenen Fixmaßen.
- Figur 8: Stapelbilder der jeweiligen Fixmaße.
- Figur 9: verpackte Fixmaßstapel.
- Figur 10: Perspektivdarstellung Stapler, teilweise.
- Figur 11: Schnittplangruppen.

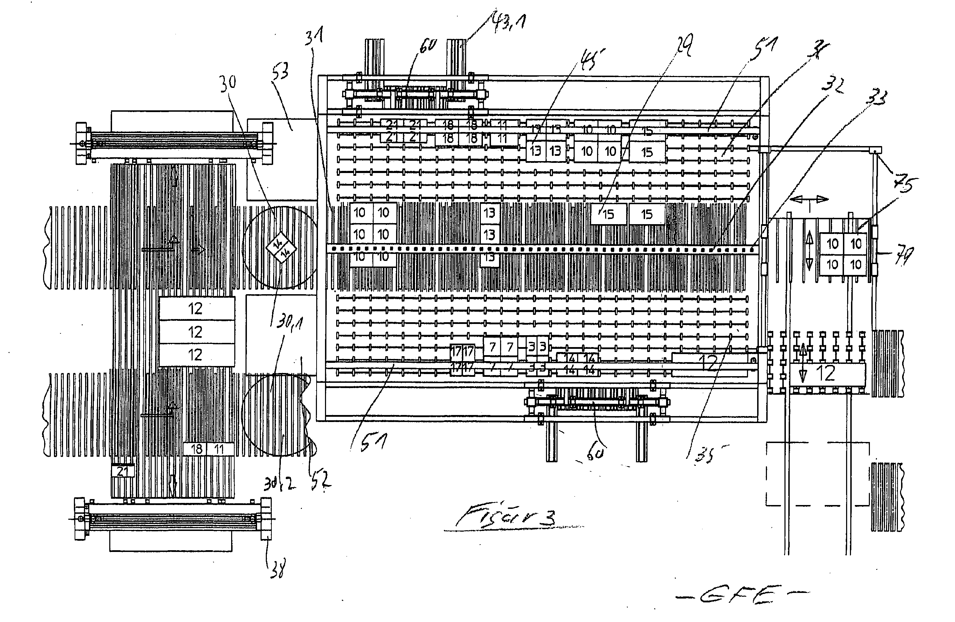

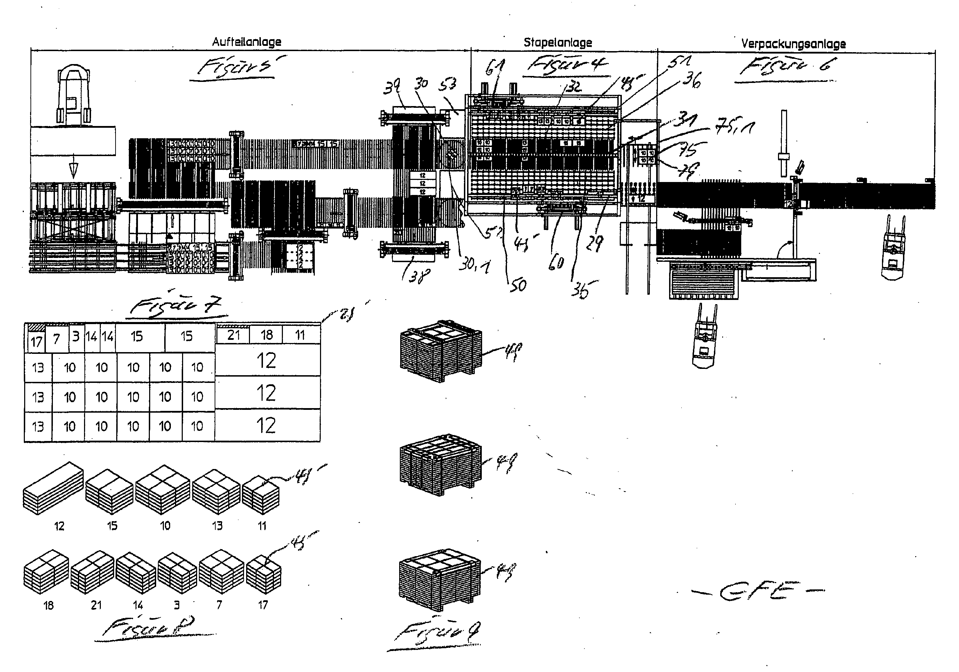

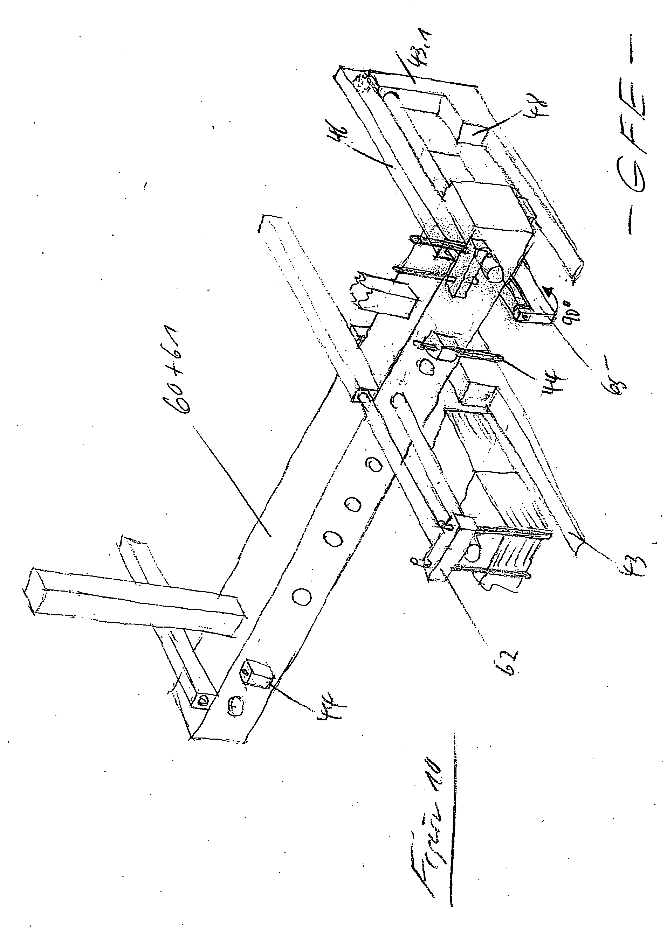

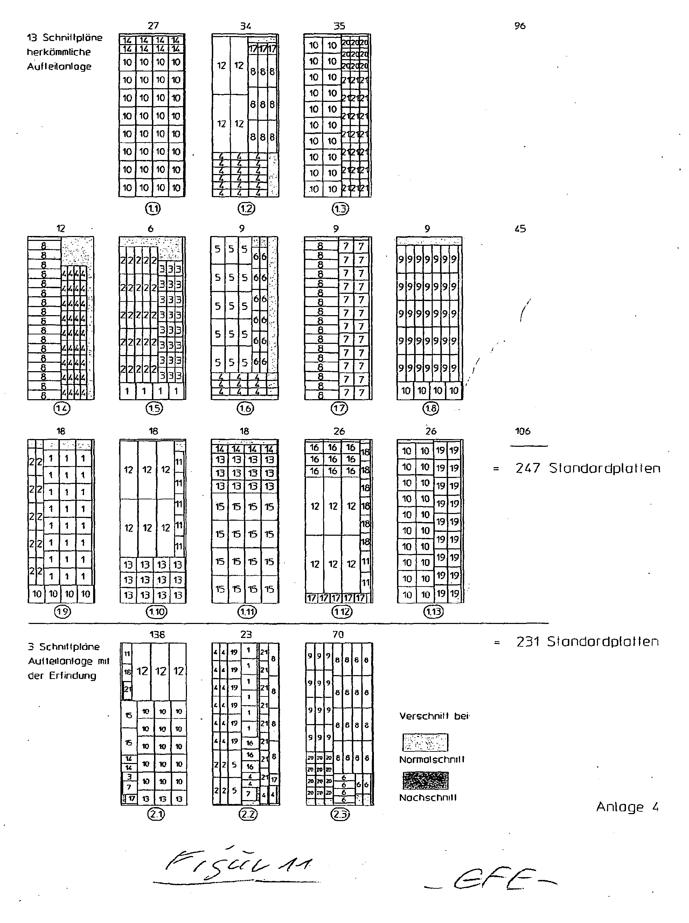

Die Fixmaße 3 bis 21 des Schnittplanes 25, Figur 7, gelangen über Förderer 30 auf Winkelförderer 31 und werden von hier, nachdem sie mittels nicht dargestellter, elektronisch-mechanischer Wegstreckenmessung die vom Optimierungsrechner 80 geplanten Positionen auf dem Winkelförderer 31 eingenommen haben, mit Fixmaßquerförderer 32 auf Friktionsförderer 35 bzw. 36 an die für sie unterhalb der Friktionsförderer 35 bzw. 36 auf der Roste 40 bzw. 41 jeweils eingeplanten Stapelbilder 45 der Fixmaße 3 bis 21 gefördert. Der Förderer 30 ist auch mit einer 90°-Dreheinrichtung 30.1 ausgerüstet, mit der wenn erforderlich Fixmaße 3 bis 21 um 90° gedreht werden.
Vorgesehen ist auch, das über einen weiteren Förderer 30.2 mit ebenfalls einer 90°-Dreheinrichtung 30.1 eine weitere Stapelanlage ähnlich der Figur 4 einzurichten vorgesehen ist.
Der Fixmaßquerförderer 32 ist mit einzelnen, vorzugsweise pneumatisch-mechanisch absenkbaren Schiebenocken 33 ausgerüstet, deren Abstände entsprechend der kleinsten Fixmaßabmessungen vorgesehen sind und die nur jeweils in dem Bereich der querzufördernden, einzelnen oder mehreren Fixmaßblöcke 29 der Fixmaße 3 bis 21, abgesenkt werden.

Die Anordnung der Fixmaße 3 bis 21 im Schnittplan 25 kann beliebig ausgeführt sein. Diese Anordnung nimmt in erster Linie rücksicht auf niedrigstmöglichen Verschnitt und höchstmögliche Anzahl verschiedener Fixmaße 3 bis 21 in einem Schnittplan 25, sowie minimale Anzahl nachzuschneidender Fixmaße, im Ausführungsbeispiel sind es 3, 7, 17, 21, wobei diese Regel beim letzten Schnittplan 22 Figur 11 der Schnittplangruppe 21 bis 23, Figur 11, bei der Anzahl der Nachschnitte außer Kraft gesetzt wird, bzw. werden kann.

Anstattdessen ist vorgesehen, dass die Stückzahl Standardplatten des letzten Schnittplanes 22 der Schnittplangruppe 21 bis 23 wie im Ausführungsbeispiel Figur 11, möglichst gering ist, damit die Nachschnittzeit an den Nachschnittsägen 38 bzw. 39 möglichst gering ist.
Es ist vorgesehen, dass aus einer beliebigen Anordnung der Fixmaße 3 bis 21 im Schnittplan 25 beliebige Stapelbilder 45 aus beliebig vielen maßgleichen oder maßungleichen Fixmaßen 3 bis 21 mit Fixmaßquerförderer 32 in Verbindung mit Friktionsförderer 35 bzw. 36 zusammenzufördern sind. Sobald die Zusammenförderung eines Stapelbildes 45 abgeschlossen ist, erfolgt wenn erforderlich durch Ausgleichsförderer 50 bzw. 51 der Ausgleich unterschiedlich hoher Fixmaßblöcke 29, indem mittels einer vorzugsweise vorgesehenen Vakuumvorrichtung 24, die heb- und senkbar ausgeführt ist, die Fixmaße 3 bis 21 so auf einem Stapelbild 45 verteilt werden, wenn es mehr als zwei Fixmaßblöcke 29 sind, dass die letzten Fixmaßblöcke 29 eines Stapelbildes 45 oben eine Ebene bilden.
Eine weitere Aufgabe des Ausgleichsförderer 50 bzw. 51 ist, dass sie die schnittplanbedingt zu viel hergestellten Fixmaße 3 bis 21 gegenüber den Bestellstückzahlen zur Ablage 52 bzw. 53 fördert, wobei es dann gleichgültig ist, ob die letzten Fixmaßblöcke 29 eines Stapelbildes 45 oben eine Ebene bilden oder nicht, wenn die Bestellstückzahlen als vorrangig zu beachten sind.
Eine weitere Aufgabe der Ausgleisförderers 50 bzw. 51 ist noch, dass die für ein Stapelbild 45 geplante Anzahl Fixmaßblöcke 29 mit oder ohne gleicher Ebene oben beim letzten Stapelbild 45 eines stapels 49 hergestellt wird.
Sobald eine Stapelbild 45, zusammengestellt aus beliebig vielen Fixmaßblöcken 29 fertiggestellt ist, wird diese von Stapler 60 bzw. 61 auf die Roste 40 bzw. 41 gefördert, die aus nebeneinanderliegenden Schienen 42 bestehen. Dabei werden die Stapelbilder 45 von Rückhaltern 44, die sich im Bereich jeder Staplerschiene 43 an jeweils einer bestimmten Stelle der Stapler 60 bzw. 61 befinden, und pneumatisch-mechanisch heb- und senkbar ausgeführt sind, zurückgehalten und somit von den Staplerschienen 43 abgestreift und auf die Roste 40 bzw. 41 oder auf einen Stapel 49 abgelegt.

Zuvor werden die Fixmaßblöcke 2 der Stapelbilder 45 auf den Staplerschienen 43 von den Seitenschiebern 65 und von den Querrichtem 62, die sich im Bereich der Staplerschienen 43 befinden, zusammengerichtet.
Die Seitenschieber 65 werden motorisch-mechanisch und zentrisch soweit zusanmmengefahren, bis die Fixmaßblöcke 29 einer Stapelbilder 45 allseitig dicht aneinanderliegen.
Unmittelbar danach werden die pneumatisch-mechanisch heb- und senkbaren Querrichter 62 mit nicht dargestellten Antrieben eingeschaltet und richten dabei die Fixmaßblöcke 29 eines Stapelbildes 45 gegen Anschläge 48 aus.

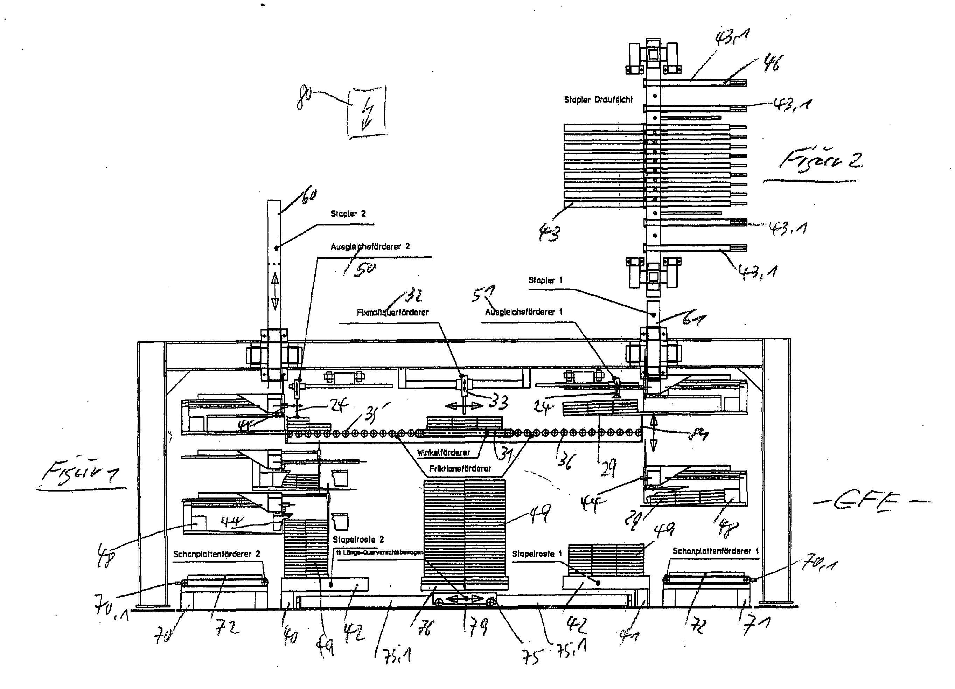

Es werden für einen Stapelvorgang zur Stapelbildung auf Roste 40 bzw. 41 jeweils nur die Staplerschienen 43 aktiv geschaltet, wie die jeweiligen Stapelgrundflächen 45 groß sind. Vorgesehen ist, dass diese Aktivschaltung in beliebigen Bereichen innerhalb der Stapler 60 bzw. 61 mit nicht dargestellten Kupplungen, die auf motorisch angetriebenen Wellen für die Staplerschienen 43 angeordnet sind, erfolgt.
Die nicht aktiven Staplerschienen 43.1 beharren in ihrer Grundstellung 46, im Ausführungsbeispiel dargestellt in Figur 2 und 10.

Die aus den Fixmaßblöcken 29 bestehenden Stapelbilder 45 werden auf Roste 40 bzw. 41 bereits bei der Herstellung der Schnittpläne 25 mit Optimierungsrechner 80 auf Datenträgern geplant, wovon ausgehend dann die einzelnen Maschinenkomponenten nach der Herstellung der Fixmaße 3 bis 21 mit Aufteilanlage Figur 5 und Stapelanlage Figur 3 und 4, wie Nachschnittsägen 38 und 39, Winkelförderer 31, Fixmaßquerförderer 32, Friktionsförderer 35 bzw. 36, Ausgleichsförderer 50 bzw. 51 Stapler 60 bzw. 61, die Stapel 49 auf Roste 40 bzw. 41 gebildet, wobei auch vorgesehen ist, dass diese Stapelbildung auf vorher mit Schonplattenförderer 70 bzw. 71 Schonplatten, Paletten o. dgl. 72 automatisch auf Roste 40 bzw. 41 gefördert werden.
Mit Längs-Querverschiebeförderer 75, der mit heb- und senkbaren Tragschienen 76 in Abständen wie die Schienen 42 der Roste 40 bzw. 41 ausgerüstet ist und in diese hineinfährt, werden die Stapel 49 in die auf Figur 1 und 2 gezeigte Position 79 sozusagen "getragen", sodass keine Beschädigungen durch Förderungsreibungen wie es bei Rollen- oder Kettenförderern üblich ist, entstehen. In dieser Stellung fährt der Längs-Querverschiebeförderer 75 um 90° versetzt zwischen den Rosten 40 bzw. 41, wo der Stapel 49 von der Verpackungsanlage Figur 10 übernommen wird.

## Patentansprüche

1. Vorrichtung für die Stapelbildung flächiger Fixmaße zu beliebigen Stapelbildern, **dadurch gekennzeichnet, dass** zunächst auf einer Fördererebene mit Winkelförderer 31, Fixmaßquerförderer 32, Friktionsförderer 35 und 36 und der Roste 70 bzw. 71 vom Optimierungsrechner 80 die Positionen der Stapelbilder 45 einer beliebigen Schnittplangruppe Figur 11 so bestimmt werden, dass ein zeitlich und stapelkörperlich nahtloser Übergang zu den jeweils nachfolgenden Schnittplangruppen gewährleistet ist, und dass die Stapelbilder 45 aus beliebigen Schnittplänen 25 in Verbindung mit Winkelförderer 31, Fixmaßquerförderer 32, die die Fixmaßblöcke 29 einzeln oder entsprechend ihrer Lage im Schnittplan 25, ihrer Aufteilfolge innerhalb der Aufteilanlage Figur 5 und der Ausführung der Stapelbilder 45 auch beliebig mehrfach zu Stapelbildern 45 auf Friktionsförderern 31 bzw. 35 zusammenfördern, wobei bei einem nacheinander erfolgendem Zusammenfördern von Fixmaßblöcken innerhalb eines Stapelbildes 45 quer zur Förderrichtung des Fixmaßquerförderers nebeneinander liegender Fixmaßblöcke 29 innerhalb eines Stapelbildes 45 durch die Ablauffestlegungen des Optimierungsrechners 80 mit Abstand auf Friktionsförderer 35 bzw 36 zu fördern vorgesehen ist, und dass die fertig zusammengeförderten Stapelbilder 45 von Friktionsförderer 35 bzw. 36 bis an die Begrenzungen 81 gefördert werden.

2. Vorrichtung für die Stapelbildung flächiger Fixmaße, nach Anspruch 1, **dadurch gekennzeichnet, dass** unterschiedlich hohe Fixmaßblöcke 29 innerhalb eines Stapelbildes 45, hervorgerufen durch unterschiedliche Stückzahlen übereinanderliegender Fixmaße, und dass schnittplanbedingt zu viel hergestellte Fixmaße 3 bis 21 gegenüber den Bestellstückzahlen mit Ausgleichsförderer 50 bzw. 51 auszugleichen vorgesehen ist, wobei die entstehenden überzähligen Fixmaße 3 bis 21 von Ausgleichsförderer 50 bzw. 51 zur Ablage 52 bzw. 53 gefördert werden.

3. Vorrichtung für die Stapelbildung flächiger Fixmaße, nach Anspruch 2, **dadurch gekennzeichnet, dass** die fertigen Stapelbilder 45 von Stapler 60 bzw. 61 auf Roste 40 bzw. 41 gefördert werden, nachdem die aktiven Staplerschinen 43, die entsprechend des jeweiligen Stapelbildes 45 vom Optimierungsrechner 80 aktiv geschaltet werden, zwischen die Scheiben 35.1 unterhalb ihrer Förderebene, bei Friktionsförderers 35 bzw 36 eingeführt, angehoben und waagerecht zurückgeförderdert werden, danach vom nicht dargestellten Hubwerken der Stapler 60 bzw. 61 zur Stapelbildung auf der Roste 40 bzw. 41 abgesenkt und dort durch Zurückfördern der aktiven Staplerschienen 43 und Absenken der Rückhalter 44 stapelbildend abgelegt werden, nachdem das jeweilige Stapelbild 45 auf den aktiven Staplerschienen 43 von 90° schwenkbeweglichen Seitenschiebern 65 und Querrichtern 62 während des Fördervorganges der Stapler 60 bzw. 61 zu Rosten 40 bzw. 41 ausgerichtet und solange in dieser Ausrichtstellung bleiben, bis der stapelbildende Ablegevorgang abgeschlossen ist.

4. Vorrichtung für die Stapelbildung flächiger Fixmaße, nach Anspruch 3, **dadurch gekennzeichnet, dass** der Friktionsförderer 32 mit Schiebenocken 33 ausgerüstet ist, deren Abstände entsprechend der kleinsten Fixmaße 3 bis 21 vorgesehen sind und die jeweils nur in dem Bereich der querzufördernden, einzelnen oder mehreren Fixmaßblöcken 29, bestimmt durch den Optimierungsrechner 80, für den Fördervorgang auf Friktionsförderer 35 bzw. 36, abgesenkt werden.

5. Vorrichtung für die Stapelbildung flächiger Fixmaße, nach Anspruch 4, **dadurch gekennzeichnet, dass** für die Förderung der fertigen Stapel 49 von der Roste 40 bzw. 41 Längs-Querverschiebeförderer 75 vorgesehen ist, der mit hebund senkbaren Tragschienen 76 ausgerüstet ist, die in der Anzahl der Abmessungen des Stapelbildes 45 in Querrichtung zur Roste 70 bzw. 71 vom Optimierungsrechner 80 auf Heben geschaltet werden, wenn der Querförderwagen des Längs-Querverschiebeförderers 75 in die Roste 70 bzw. 71 für die Übernahme eines oder mehrerer Stapel 49 eingefördert ist, und danach auf Position 79 Figur 1 und 2 zurück gefördert wird, von der er dann 90° versetzt mit dem Längsverschiebewagen 75.1 des Längs-Querverschiebförderers 75 zur Verpackungsanlage Figur 6 gefördert wird.

6. Vorrichtung für die Stapelbildung flächiger Fixmaße, nach Anspruch 5, **dadurch gekennzeichnet, dass** neben Roste 70 bzw. 71 jeweils automatisch arbeitenden Schonplattenförderer 70 bzw. 71 vorgesehen sind, die Schonplatten, Paletten o. dgl. 72 mit Nockenförderern 70.1 auf die Positionen der Roste 40 bzw. 41 fördern, wo die Stapel 49 gebildet werden.

7. Vorrichtung für die Stapelbildung flächiger Fixmaße, nach Anspruch 6, **dadurch gekennzeichnet, dass** eine oder mehrere Stapelanlagen Figur 3 bzw. Figur 4 nach einer Aufteilsäge Figur 5 einzurichten vorgesehen ist, und das die die Aufteilsäge Figur 5 und Stapelanlage Figur 3 bzw. Figur 4 verbindenden Förderer 30 bzw. 30.2 mit 90°-Dreheinrichtungen 30.1 ausgerüstet sind.

8. Vorrichtung für die Stapelbildung flächiger Fixmaße, nach Anspruch 7, **dadurch gekennzeichnet, dass** dem Optimierungsrechner 80 vorgegeben ist, Schnittpläne 25 mit am häufigsten nachzuschneidenden Fixmaßen, im Ausführungsbeispiel Figur 11 die Fixmaße 1, 4, 7, bei Schnittplan 22, an das Ende einer Optimierungsrechnung einer Schnittplangruppe 21 bis 23 zu legen und dabei zu errechnen hat, dass die Stückzahl Standardplatten geringstmöglich ist, bei beliebig hoher Anzahl verschieden großer Fixmaße 3 bis 21.
